# EUROPEAN PATENT SPECIFICATION

(11) **EP 3 350 091 B1**
(45) Date of publication and mention of the grant of the patent: **01.11.2023**
(21) Application number: 16774633.8
(22) Date of filing: 14.09.2016
(51) Int. Cl.: B65D 47/20, B29C 45/00

(54) **A DISPENSING CLOSURE**
AUSGABEVERSCHLUSS
BOUCHON DISTRIBUTEUR

(30) Priority: 14.09.2015 GB 201516188
(43) Date of publication of application: 25.07.2018
(73) Proprietor: Obrist Closures Switzerland GmbH, 4132 Muttenz (CH)
(72) Inventor: PUDERBACH, Dirk, 56856 Zell/Mosel (DE); VERITE, Sylvain, 56856 Zell/Mosel (DE); SCHAWO, Rainer, 56856 Zell (Mosel) (DE)
(74) Representative: Bryers LLP
(86) International application number: PCT/EP2016/071736
(87) International publication number: WO 2017/046186

(56) References cited:
- EP-A1- 0 926 075
- WO-A1-93/19994
- WO-A1-2014/068069
- JP-A- H09 301 403
- US-A- 5 058 775
- US-A- 6 029 866
- US-A1- 2004 112 927
- US-A1- 2004 159 684

## Description

This invention relates to a dispensing closure for a container and in particular to a disc top dispensing closure. The invention also relates to a method of forming closures with a base and a disk.

In known closures of this type, which are typically formed from injection moulded plastics, a spout is formed as part of a disc-like lid which is pivotably connected to a closure cap or base for rocking or tilting movement between open and closed positions. Such container and closure combinations may contain and dispense products in the form of, for example, particulates, pastes, liquids, granules, or aerosols. A dispensing closure according the preamble of claim 1 is known from WO 2014/068069 A1.

According to an aspect of the present invention there is provided a dispensing closure comprising a base attachable to a container and an actuator disc pivotally mounted on the base, the disc including a dispensing channel and being pivotable between a closed position which prevents fluid product dispensing and an open position which allows product fluid dispensing through the channel, in which the base and disc materials are both thermoplastic polymers, in which the base and the disc are formed from different materials, characterised in that the base and disc are formed from the same type of material, in that the base and the disc are formed from a polypropylene-based material, and in that one of the base and disc is formed from a copolymer polypropylene and the other is formed from a homopolymer polypropylene.

Forming the components from different materials allows, for example, different properties to be provided such as colour, transparency, strength and friction.

In one embodiment the base is formed from a homopolymer polypropylene and the disc is formed from a copolymer polypropylene.

The base and/or the disc may include an interference member. The member may be provided to prevent tilting of the actuator disc until a sufficient predetermined opening force is applied. This can be useful, for example, to prevent accidental opening of the closure.

For example the disc may include an interference member for engaging the base when disc is moved to the open position.

In some embodiments the interference member is a friction rib.

The closure may comprises a tamper-evident member for indicating if the disc has moved from an initially closed position to the open position.

In some embodiments the tamper-evident member must be activated to allow the disc to move to the open position. For example the member may prevent movement of the disc from the initially closed to the open position, and therefore must first be deactivated (e.g. by moving or removing it). As well as providing tamper-evident functionality this could be useful, for example, to prevent accidental opening during transport or storage of the closure.

In other embodiments the tamper-evident member may be activated by movement of the disc to the open position. In other words the act of moving the disc from the initially closed to the open position automatically activates the tamper evidence.

In some embodiments the tamper-evident member is at least partly removed in use. For example the member may be completely removed in use.

The member may include a pull tab to assist with partial/complete removal.

At least part of the tamper-evident member may remain on the closure after first opening.

For example part of the member may remain on the lid and/or base.

The tamper-evident member may be a strip or band.

The tamper-evident member may be frangibly connected to the disc in the initially closed position, for example by one or more frangible bridges. Alternatively or additionally the tamper-evident member may be frangibly connected to the base in the initially closed position, for example by one or more frangible bridges.

The base may be non-removably attachable to a container. Preferably, the base is removably attached, for example by screw thread engagement.

The base may comprise tamper-indicating means for indicating if it has been removed from a container.

The tamper-evident member may be formed integrally with the disc and/or the base, for example by injection moulding of a plastics material.

The tamper-evident member may be at least partly removable and the member may include a pull tab or the like to facilitate removal by a user.

The base may be generally cylindrical, for example with a generally circular, oval, ellipsoidal or polygonal section.

The disc may comprise a recess for assisting movement to the open position.

The present invention may provide for a closure as described herein in combination with a container.

A further aspect of the invention provides a method of forming a closure as defined by appended claim 15.

Preferably, each disc cavity corresponds to a base cavity. The method may include the step of arranging the moulds in the machine to have the same parting line;. The pick and place unit may be used to assemble the base and disc together by matching bases and discs from corresponding cavities;.

Different aspects and embodiments of the invention may be used separately or together.

Further particular and preferred aspects of the present invention are set out in the accompanying independent and dependent claims. Features of the dependent claims may be combined with the features of the independent claims as appropriate.

The present invention will now be more particularly described, by way of example, with reference to the accompanying drawings, in which:
Figure 1 is a perspective view of a closure lid formed in accordance with the present invention;
Figure 2 is a perspective view of a closure incorporating the lid of Figure 1 and shown in an unopened position;
Figure 3 shows the closure of Figure 1 during first opening;
Figure 4 shows the closure of Figure 1 following re-closing of the lid;
Figure 5 is a perspective view of a closure lid formed according to a further embodiment;
Figure 6 shows a closure incorporating the lid of Figure 5 and shown in an unopened condition;
Figure 7 is a section of a closure formed according to a further embodiment;
Figure 8 is a perspective sectional view of arear part of the closure of Figure 7;
Figure 9 is an underplan view of a lid forming part of the closure of Figure 7;
Figure 10 shows the closure of Figure 7 following opening;
Figure 11 is a perspective view of a closure formed in accordance with a method of manufacture according to the present invention;
Figure 12 is a perspective view of a further closure which does not form part of the invention;
Figure 13 is an exploded section of a closure formed in accordance with a method of manufacture according to the present invention;
Figure 14 is a perspective view of the closure of Figure 13;
Figure 15 shows the two parts depicted in Figures 13 and 14 assembled together into a dispensing closure;
Figure 16 shows the layout of a moulding machine formed in accordance with the present invention; and
Figures 17A to 17C show a sequence of steps after moulding of two different parts in a machine of the type shown in Figure 16.

In the following description, all orientational terms, such as upper, lower, front, rear, radially and axially, are used in relation to the drawings and should not be interpreted as limiting on the invention or its connection to a closure.

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

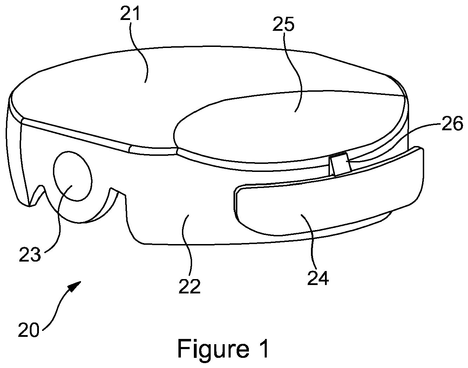

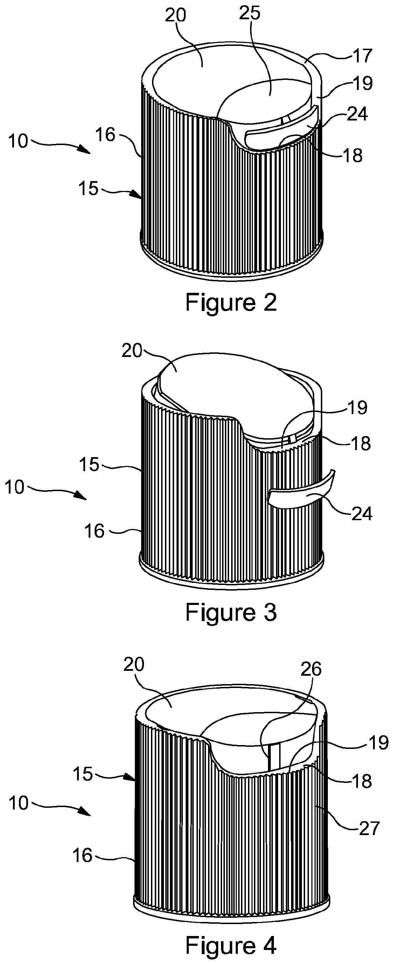

Referring first to Figures 1 and 2 there is shown a disc-top or toggle-action style dispensing closure generally indicated 10. The closure comprises a generally cylindrical base 15 and a lid 20 (or actuator disc) pivotally mounted to the base 15.

The base is mountable on a container neck (not shown) for example by screw thread, ratchet, lugs, bayonet or snap bead engagement.

The base 15 comprises a generally cylindrical sidewall 16. One end 17 of the sidewall has a notch or cut-out portion 18.

The lid 20 is generally disc-like, with a circular top plate 21 and a truncated sidewall 22 depending from the periphery thereof. Two diametrically opposed pivot projections or trunnions 23 (only one is shown) are provided and engage in corresponding sockets/recesses in the interior of the base sidewall. This allows the lid to pivot with respect to the base.

An integrally formed tamper-evident strip 24 is provided and is frangibly connected to the lid sidewall 22, projecting outwardly therefrom. The strip 24 is positioned so that it sits in the sidewall notch 18, directly above the section of sidewall 19 forming the notch.

At a point corresponding to approximately half way along the width of the notch 18 the lid sidewall includes an interference projection 26. The base 27 of the projection 26 abuts against the notch wall 19 which means the lid cannot move towards the open position without a deliberate action i.e. the projection 26 is like a detent to make sure the lid is held stably in the closed position. Deliberate and predetermined force must be used to overcome this and move the disc lid to the open position.

In the unopened position the strip 24 extends over the projection 26.

The top plate 21 includes a depression 25 at one side adjacent the strip 24 for manually pivoting the lid to an open position.

The lid comprises a dispensing channel which terminates with a dispensing opening generally opposite the projection 26. In the closed position the opening is blocked and in the open position the opening is unblocked and a dispensing path is established between the container and the opening, through the base and then through the channel in the lid.

The lid 20 is movable from a closed position to an open position by pressing downward on one side of the lid, thereby pivoting the lid on the base, lifting the opposite side of the lid and exposing a discharge opening. However, because the strip 24 sits in/on the notch 18 this prevents movement of the lid. The act of pressing down on the depression 25 causes the strip to be broken away from the sidewall, as shown in Figure 3. In other words, the intention is not for the strip to be removed by the user before opening, but for the strip to be arranged so that it is automatically separated from the lid as it is forced down against the notch and as the remained of the lid pivots down.

Figure 4 shows the lid pivoted back to the closed position.

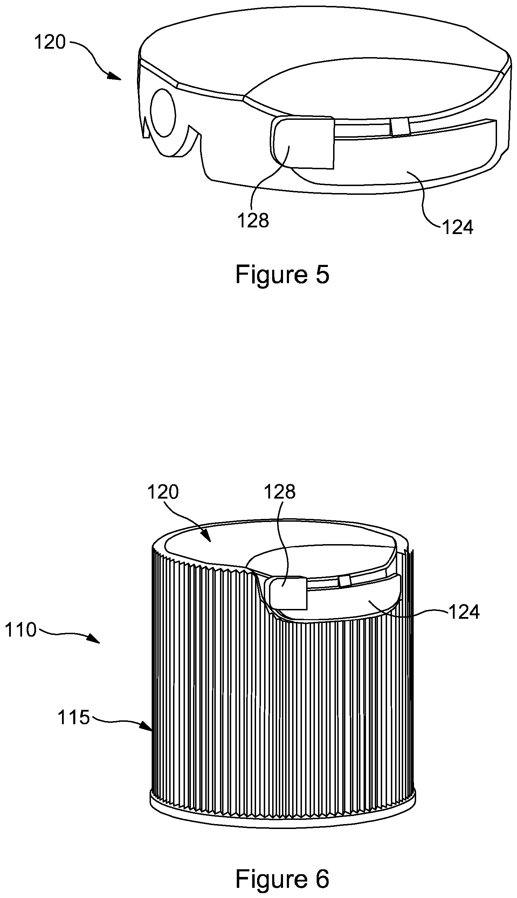

Figures 5 and 6 show a closure 110 formed according to a further embodiment. The closure is similar to the closure 10 except that the tamper strip 124 must be manually removed before the lid can be moved to the open position for the first time. For this purpose one side of the strip 124 is provided with a pull tab 128 so that the strip can be torn away from the lid sidewall 122.

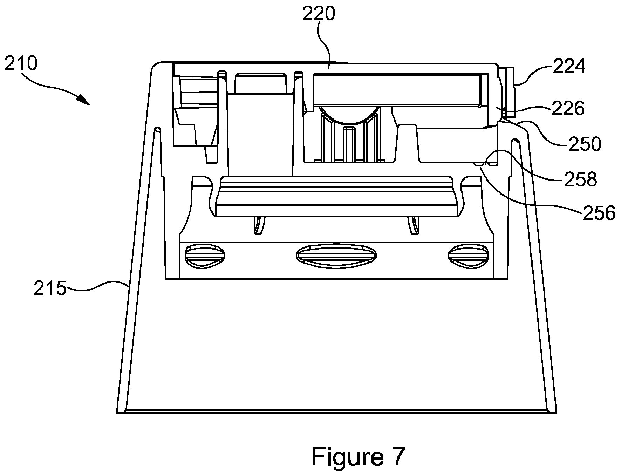

Figure 7 shows a tamper-evident disc-top closure 210 formed according to a further embodiment and shown in a closed, unopened position. In this embodiment the lid 220 is formed from a polypropylene copolymer material and the base 215 is formed from a polypropylene monomer material.

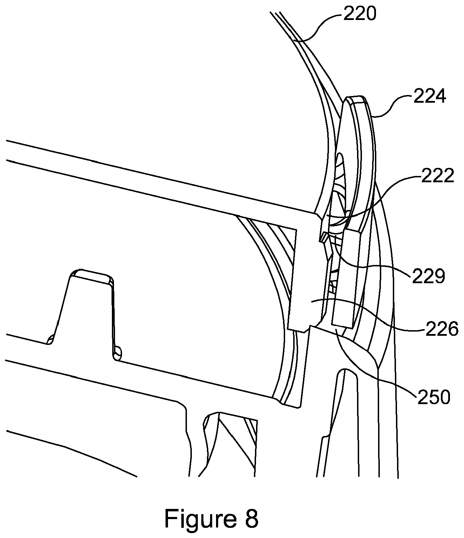

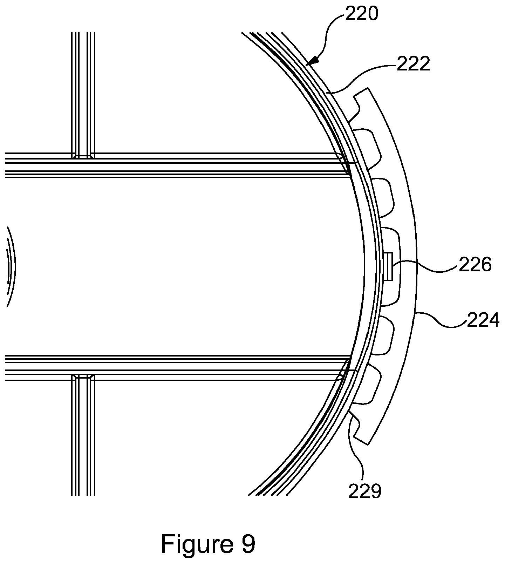

As also shown in Figures 8 and 9, the lid 220 is provided with an arcuate tamper-evident strip 224 which is frangibly connected to the lid sidewall 222 by frangible bridges 229 that extend from inner face of the lower part of the stip. In this embodiment the interference projection 226 is positioned at the rear of the lid and approximately centrally with respect to the strip 224.

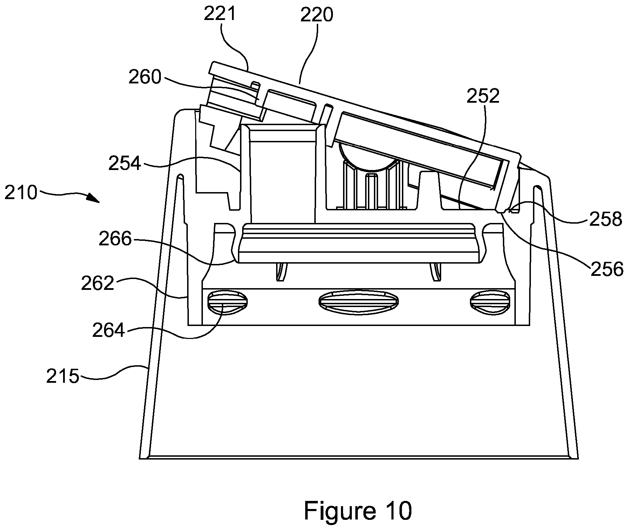

The base 215 includes a rear shoulder 250. In the unopened position the strip 224 is positioned just above the shoulder 250. The projection 226 prevents opening of the closure in the absence of a deliberate force by a user. When such force is applied the strip is pressed down against the shoulder 250, which causes the bridges 229 to break and the strip 224 automatically breaks off the lid (i.e. it does not need to be torn off) as shown in Figure 10. In this embodiment the top deck 252 of the base (from which the base spout 254 emerges) is provided with a channel 256 into which the free end of the lid skirt moves, and a bead 258 against which the free end of the projection abuts. The lid top plate 221 includes a depending annular sealing wall 260 which blocks the spout when in the closed position. In this embodiment the base also includes an internal annular skirt 262 which depends from the top plate 221; at the free end of the skirt 262 are a plurality of spaced arcuate snap beads which allow the closure to be snap fitted onto a container neck. Radially inward of the skirt 262 is an annular sealing projection 266 which seals into the interior of a container neck in use.

As discussed above, in this embodiment the materials from which the base and lid are formed are different. It has been found that, in combination with the requirement to break the bridges, this provides a higher opening force the first time the closure is opened; and thereafter the opening force required for subsequent openings is reduced. This provides an improved user experience, with confidence that the closure has not already been opened due to the increased initial opening force, and then the opening force reduces for subsequent openings.

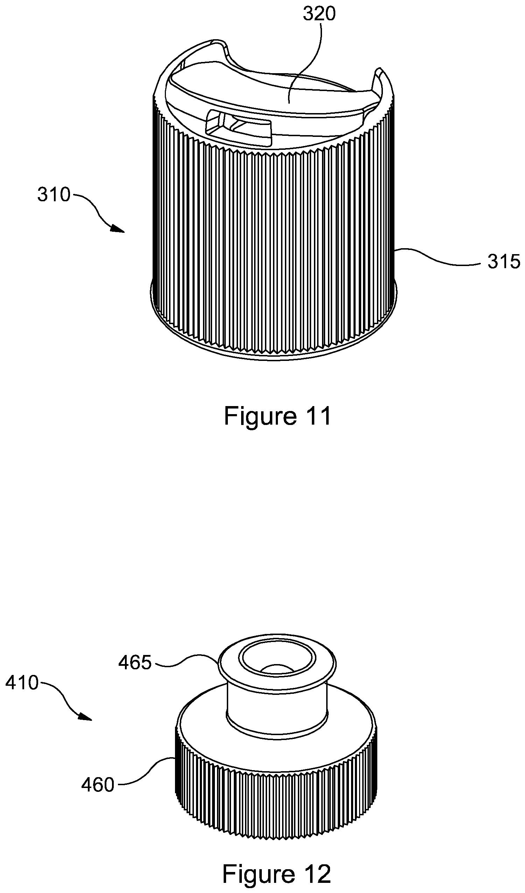

Figures 11 and 12 show a two-part (base 315; lid 320) disc-top closure 310 suitable for production based on the principles of the present invention and a two-part (base 460; mobile spout 465) push-pull closure 410.

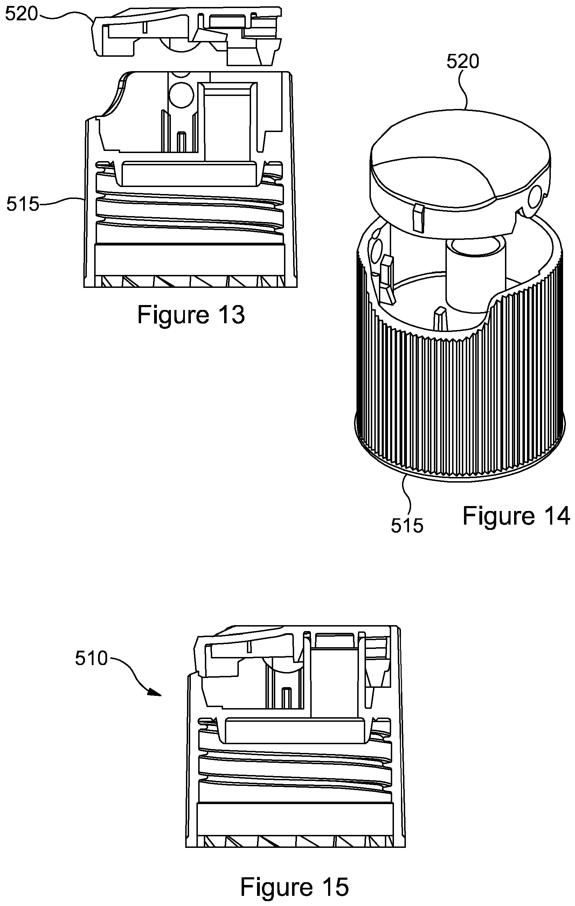

Figures 13 and 14 show exploded views of a two-part disc-top dispensing closure, with a base 515 and lid 520 shown unassembled. Figure 15 shows the parts 515, 520 assembled to form a complete closure 510. In other embodiments the base and/or lid may be provided with a tamper-evident system of the type discussed above.

The principle is to combine two moulds:
- in one parting line
- in a bi injection press which being linked
- with a robot pick & place system

The moulds may be mounted on an adaptation plate which allows conversion from an IMP&P (IMA) mould into a single face mould.

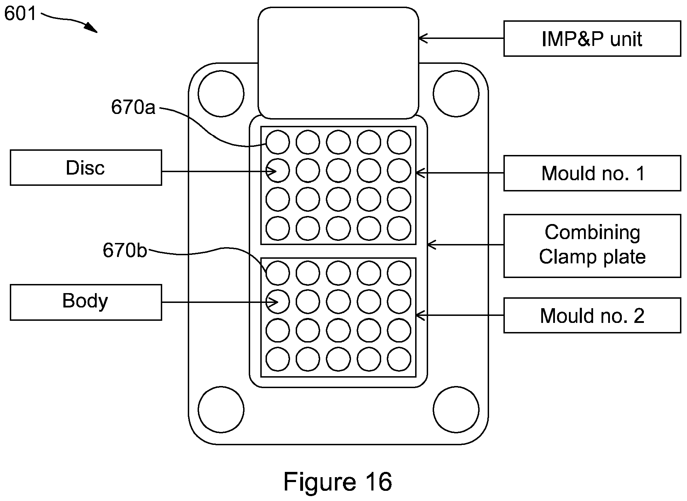

Figure 16 shows the basic layout of the moulding machine 601. A disc mould is provided and a base/body mould is provided. The moulds have a plurality of cavities and the cavities correspond, for example cavity 670a in the disc mould corresponds with cavity 675a in the base mould.

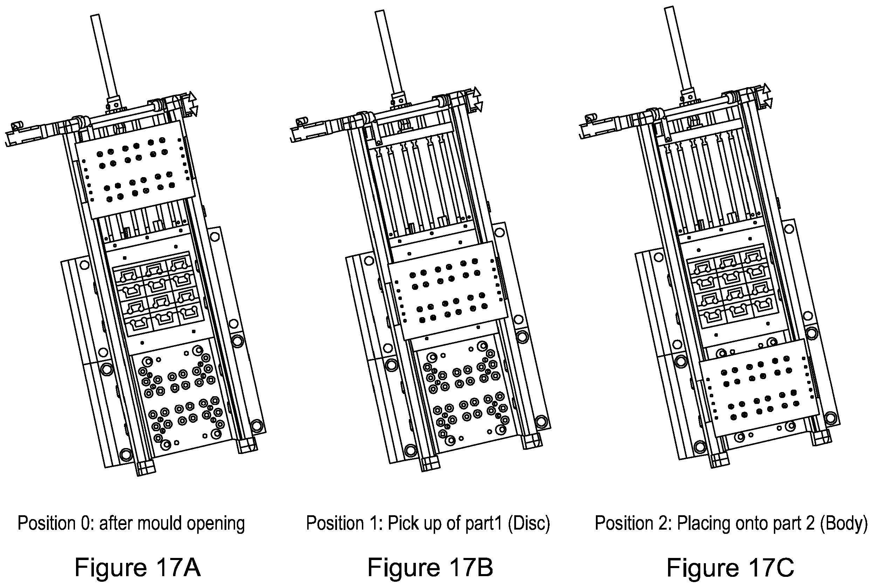

As illustrated in Figures 17A to 17C in use, there is a moulding phase in which lids and bases are injection moulded. Then the moulds are opened and the pick and place unit picks up lids and moves them over to the base mould where they are assembled onto the base. It will be noted that this systems means the cavities in the moulds are in stable pairs i.e. the disc from cavity 670a is always assembled onto to the base of cavity 675b. Because pairing of the components is not random and is always the same this means that alignment of the parts is excellent and accordingly tolerances of the parts can be reduced.

Features and/or advantages of the present invention may include one or more of:
Two separate moulds combined in one bi-injection machine
No compromise needed in terms of demoulding functions
No need for "special" machines and devices f.i. turntables
Easy to convert format to make non-assembled parts
Re-design of one part possible and keeping the second part (2nd mould)
Fast to change mould sides - days rather than weeks
Easier and lighter than other IMA solutions
Not as restricted in design as other IMA solutions
Can be designed such that parts could be assembled off line also
Prototype and pilot better replicate production mould function

Although illustrative embodiments of the invention have been disclosed in detail herein, with reference to the accompanying drawings, it is understood that the invention is not limited to the precise embodiments shown and that various changes and modifications can be effected therein by one skilled in the art without departing from the scope of the invention which is defined by the following claims.

## Claims

1. A dispensing closure (10) comprising a base (15) attachable to a container and an actuator disc (20) pivotally mounted on the base (15), the disc (20) being pivotable between a closed position which prevents fluid product dispensing and an open position which allows product fluid dispensing, in which the base (15) and disc (20) materials are both thermoplastic polymers, in which the base (15) and the disc (20) are formed from different materials, **characterised in that** the base (15) and disc (20) are formed from the same type of material, **in that** the base and the disc are formed from a polypropylene-based material, and **in that** one of the base (15) and disc (20) is formed from a copolymer polypropylene and the other is formed from a homopolymer polypropylene.

2. A closure (10) as claimed in claim 1, in which the base (15) is formed from a homopolymer polypropylene and the disc (20) is formed from a copolymer polypropylene.

3. A closure (10) as claimed in any preceding claim, in which the base (20) and/or the disc (15) include an interference member (26).

4. A closure (10) as claimed in claim 3, in which the disc (15) includes an interference member (26) for engaging the base (15) when disc (20) is moved to the open position.

5. A closure (10) as claimed in claim 3 or claim 4, in which the interference member (26) is a friction rib.

6. A closure (10) as claimed in any of claims 3 to 6, in which the interference member (26) prevents tilting of the actuator disc until a sufficient predetermined opening force is applied.

7. A closure (10) as claimed in any preceding claim, in which the closure (10) comprises a tamper-evident member (24) for indicating if the disc (20) has moved from an initially closed position to the open position.

8. A closure (10) as claimed in claim 7, in which the tamper-evident member (24) prevents movement of the disc (20) from the initially closed to the open position,

9. A closure (10) as claimed in claim 7 or claim 8, in which at least part of the tamper-evident member (24) remains on the closure after first opening.

10. A closure (10) as claimed in any of claims 7 to 9, in which the tamper-evident member (24) must be activated to allow the disc (20) to move to the open position.

11. A closure (10) as claimed in any of claims 7 to 9, in which the tamper-evident member (24) is activated by movement of the disc (20) to the open position.

12. A closure (10) as claimed in any of claims 7 to 11, in which the tamper-evident member (24) is frangibly connected to the disc (20) and/or the base (15) in the initially closed position.

13. A closure as claimed in any of claims 7 to 12, in which the tamper-evident member (124) includes a pull tab (128) to assist with partial/complete removal.

14. A closure (10) as claimed in any preceding claim in combination with a container.

15. A method of forming a closure as claimed in any of claims 1 to 13 and with the base and disc being formed as a first part and a second part, the method comprising the steps of:
- providing an injection moulding machine (601);
- providing a mould having one or more cavities for forming one or more first parts;
- providing a mould having one or more cavities for forming one or more second parts;
- providing an in-mould pick and place unit;
- injection moulding the first and second part/s;
- using the pick and place unit to assemble the parts together; and
- ejecting the assembled closure from the machine.

## Patentansprüche

1. Ausgabeverschluss (10), umfassend eine an einem Behälter befestigbare Basis (15) und eine Betätigungsscheibe (20), die verschwenkbar an der Basis (15) montiert ist, wobei die Scheibe (20) zwischen einer geschlossenen Stellung, in der die Fluidproduktabgabe verhindert wird, und einer geöffneten Stellung, in der die Fluidproduktabgabe zugelassen wird, verschwenkbar ist, wobei die Materialien der Basis (15) und der Scheibe (20) thermoplastische Polymere sind, wobei die Basis (15) und die Scheibe (20) aus unterschiedlichen Materialen ausgebildet sind, **dadurch gekennzeichnet, dass** die Basis (15) und die Scheibe (20) aus demselben Materialtyp ausgebildet sind, dadurch, dass die Basis und die Scheibe aus einem Material auf Polypropylenbasis ausgebildet sind und dadurch, dass die Basis (15) oder die Scheibe (20) aus einem Polypropylen-Copolymer ausgebildet ist und das andere Element aus einem Polypropylen-Homopolymer ausgebildet ist.

2. Verschluss (10) nach Anspruch 1, wobei die Basis (15) aus einem Polypropylen-Homopolymer ausgebildet ist und die Scheibe (20) aus einem Polypropylen-Copolymer ausgebildet ist.

3. Verschluss (10) nach einem der vorstehenden Ansprüche, wobei die Basis (20) und/oder die Scheibe (15) ein Interferenzelement (26) umfasst.

4. Verschluss (10) nach Anspruch 3, wobei die Scheibe (15) ein Interferenzelement (26) umfasst, um in die Basis (15) einzugreifen, wenn die Scheibe (20) in die geöffnete Stellung bewegt wird.

5. Verschluss (10) nach Anspruch 3 oder Anspruch 4, wobei das Interferenzelement (26) eine Reibungsrippe ist.

6. Verschluss (10) nach einem der Ansprüche 3 bis 6, wobei das Interferenzelement (26) die Neigung der Betätigungsscheibe verhindert, bis eine ausreichende, festgelegte Öffnungskraft aufgebracht wird.

7. Verschluss (10) nach einem der vorstehenden Ansprüche, wobei der Verschluss (10) ein Manipulationsnachweiselement (24) umfasst, um anzuzeigen, ob die Scheibe (20) von einer anfänglichen geschlossenen Stellung in die geöffnete Stellung bewegt wurde.

8. Verschluss (10) nach Anspruch 7, wobei das Manipulationsnachweiselement (24) die Bewegung der Scheibe (20) von der anfänglichen geschlossenen in die geöffnete Stellung verhindert.

9. Verschluss (10) nach Anspruch 7 oder Anspruch 8, wobei zumindest ein Teil des Manipulationsnachweiselements (24) nach dem ersten Öffnen am Verschluss verbleibt.

10. Verschluss (10) nach einem der Ansprüche 7 bis 9, wobei das Manipulationsnachweiselement (24) aktiviert werden muss, damit sich die Scheibe (20) in die geöffnete Stellung bewegen kann.

11. Verschluss (10) nach einem der Ansprüche 7 bis 9, wobei das Manipulationsnachweiselement (24) durch die Bewegung der Scheibe (20) in die geöffnete Stellung aktiviert wird.

12. Verschluss (10) nach einem der Ansprüche 7 bis 11, wobei das Manipulationsnachweiselement (24) in der anfänglichen geschlossenen Stellung zerbrechlich mit der Scheibe (20) und/oder der Basis (15) verbunden ist.

13. Verschluss nach einem der Ansprüche 7 bis 12, wobei das Manipulationsnachweiselement (124) eine Zuglasche (128) umfasst, um zum teilweisen/vollständigen Entfernen beizutragen.

14. Verschluss (10) nach einem der vorstehenden Ansprüche in Kombination mit einem Behälter.

15. Verfahren zum Ausbilden eines Verschlusses nach einem der Ansprüche 1 bis 13, wobei die Basis und die Scheibe als erster Teil und zweiter Teil ausgebildet werden, wobei das Verfahren die folgenden Schritte umfasst:
- Vorsehen einer Spritzgießmaschine (601);
- Vorsehen einer Form, die einen oder mehrere Hohlräume zum Ausbilden eines oder mehrerer erster Teile aufweist;
- Vorsehen einer Form, die einen oder mehrere Hohlräume zum Ausbilden eines oder mehrerer zweiter Teile aufweist;
- Vorsehen einer Aufnehm- und Ablegeeinheit in der Form;
- Spritzgießen des/der ersten und zweiten Teils/Teile;
- Verwenden der Aufnehm- und Ablegeeinheit zum Montieren der Teile und
- Ausstoßen des montierten Verschlusses aus der Maschine.

## Revendications

1. Fermeture de distribution (10) comprenant une base (15) pouvant être fixée à un récipient et un disque d'actionnement (20) monté pivotant sur la base (15), le disque (20) pouvant pivoter entre une position fermée qui empêche la distribution de produit fluide et une position ouverte qui permet la distribution de produit fluide, dans laquelle les matériaux de la base (15) et du disque (20) sont tous les deux des polymères thermoplastiques, dans laquelle la base (15) et le disque (20) sont formés de matériaux différents, **caractérisée en ce que** la base (15) et le disque (20) sont formés du même type de matériau, **en ce que** la base et le disque sont formés d'un matériau à base de polypropylène, et **en ce que** l'un de la base (15) et du disque (20) est formé d'un polypropylène copolymère et l'autre est formé d'un polypropylène homopolymère.

2. Fermeture (10) selon la revendication 1, dans laquelle la base (15) est formée d'un polypropylène homopolymère et le disque (20) est formé d'un polypropylène copolymère.

3. Fermeture (10) selon une quelconque revendication précédente, dans laquelle la base (20) et/ou le disque (15) comportent un élément d'interférence (26) .

4. Fermeture (10) selon la revendication 3, dans laquelle le disque (15) comporte un élément d'interférence (26) pour entrer en prise avec la base (15) lorsque le disque (20) est déplacé vers la position ouverte.

5. Fermeture (10) selon la revendication 3 ou la revendication 4, dans laquelle l'élément d'interférence (26) est une nervure de frottement.

6. Fermeture (10) selon l'une quelconque des revendications 3 à 6, dans laquelle l'élément d'interférence (26) empêche un basculement du disque d'actionnement jusqu'à ce qu'une force d'ouverture prédéterminée suffisante soit appliquée.

7. Fermeture (10) selon une quelconque revendication précédente, dans laquelle la fermeture (10) comprend un élément d'inviolabilité (24) pour indiquer si le disque (20) s'est déplacé d'une position initialement fermée à la position ouverte.

8. Fermeture (10) selon la revendication 7, dans laquelle l'élément d'inviolabilité (24) empêche un mouvement du disque (20) de la position initialement fermée à la position ouverte.

9. Fermeture (10) selon la revendication 7 ou la revendication 8, dans laquelle au moins une partie de l'élément d'inviolabilité (24) reste sur la fermeture après la première ouverture.

10. Fermeture (10) selon l'une quelconque des revendications 7 à 9, dans laquelle l'élément d'inviolabilité (24) doit être activé pour permettre au disque (20) de se déplacer vers la position ouverte.

11. Fermeture (10) selon l'une quelconque des revendications 7 à 9, dans laquelle l'élément d'inviolabilité (24) est activé par un mouvement du disque (20) vers la position ouverte.

12. Fermeture (10) selon l'une quelconque des revendications 7 à 11, dans laquelle l'élément d'inviolabilité (24) est relié de manière frangible au disque (20) et/ou à la base (15) dans la position initialement fermée.

13. Fermeture selon l'une quelconque des revendications 7 à 12, dans laquelle l'élément d'inviolabilité (124) comprend une languette de traction (128) pour faciliter un retrait partiel/complet.

14. Fermeture (10) selon une quelconque revendication précédente en association avec un récipient.

15. Procédé de formation d'une fermeture selon l'une quelconque des revendications 1 à 13 et avec la base et le disque formant une première partie et une seconde partie, le procédé comprenant les étapes suivantes :
- la fourniture d'une machine de moulage par injection (601) ;
- la fourniture d'un moule ayant une ou plusieurs cavités pour former une ou plusieurs premières parties ;
- la fourniture d'un moule ayant une ou plusieurs cavités pour former une ou plusieurs secondes parties ;
- la fourniture d'une unité de ramassage et dépôt dans le moule ;
- le moulage par injection des première(s) et seconde(s) partie(s) ;
- l'utilisation de l'unité de ramassage et dépôt pour assembler les parties ; et
- l'éjection de la fermeture assemblée depuis la machine.
